# EUROPEAN PATENT SPECIFICATION

(11) **EP 3 623 959 B1**
(45) Date of publication and mention of the grant of the patent: **31.05.2023**
(21) Application number: 19197604.2
(22) Date of filing: 16.09.2019
(51) Int. Cl.: G06F 16/25, F04C 18/16, F04C 29/00, G06F 40/14, G06F 40/149, G06F 40/221, H04L 67/1097, H04L 67/51, H04L 67/563

(54) **STREAMING PARSER FOR STRUCTURED DATA-INTERCHANGE FILES**
STREAMING-PARSER FÜR STRUKTURIERTE DATENAUSTAUSCHDATEIEN
ANALYSEUR SYNTAXIQUE DE FLUX POUR FICHIERS D'ÉCHANGE DE DONNÉES STRUCTURÉS

(30) Priority: 17.09.2018 US 201816132717
(43) Date of publication of application: 18.03.2020
(73) Proprietor: ServiceNow, Inc., Santa Clara, CA 95054 (US)
(72) Inventor: ROS, Fernando, Santa Clara, CA California 95054 (US); MOTAMEDI, Khosrow Jian, Santa Clara, CA California 95054 (US); KRASNOW, Gregory Allen, Santa Clara, CA California 95054 (US); BELL, Douglas Andrew, Santa Clara, CA California 95054 (US)
(74) Representative: EIP

(56) References cited:
- US-A1- 2007 113 171

## Description

### BACKGROUND

Over the last several decades, the memory size of many computing devices, such as personal computers and servers, has grown along with the capacity of networks that these devices use for communication. The representation of information in data-interchange files has accordingly evolved from memory-efficient and capacity-efficient binary encodings to less efficient text-based human-readable forms such as the Extensible Markup Language (XML), JavaScript Object Notation (JSON), and YAML (which is a recursive acronym for YAML Ain't Markup Language). These human-readable formats are commonly used for communication between a web browser and a web server, for example, and have the advantages of being simple to create, parse, and debug.

Nonetheless, as their adoption increases, files using human-readable data-interchange formats have grown in size to be hundreds of megabytes (or more) in some cases. Since these files are downloaded in full and then parsed, they require a great deal of memory storage on the parsing device, not to mention that they may take several minutes to download on some network connections. Further, with the recent rise of small-capacity Internet-of-Things (IOT) devices, many of which having limited memory and processing resources, it remains questionable whether large human-readable data-interchange files are viable at all in IOT deployments.

US patent application publication no. US2007/0113171 describes a method and apparatus for accelerating processing of a structured document. A hardware XML accelerator includes one or more processors (e.g., CMT processors), one or more hardware XML parser units, one or more cryptographic units and various interfaces (e.g., to memory, a network, a communication bus). An XML document may be processed in its entirety or may be parsed in segments (e.g., as it is received). A parser unit parses a document or segment character by character, validates characters, assembles tokens from the document, extracts data, generates token headers (to describe tokens and data) and forwards the token headers and data for consumption by an application. A cryptographic unit may enforce web security, XML security or some other security scheme, by providing encryption/decryption functionality, computing digital signatures, etc.

### SUMMARY

In order to address these issues, and potentially to solve other problems as well, the embodiments herein introduce a streaming parser for files using human-readable data-interchange formats. The streaming parser receives and processes such a file in discrete blocks. The receiving and parsing activities occur in parallel and in a pipelined fashion. Thus, while block *i of n* is being parsed, block *i* + 1 of *n* may be received. Under most conditions, this effectively limits the memory requirements of the device that carries out the parsing to be on the order of the size of two blocks. As block size can be configurable, the streaming parser can operate on a device with less memory than the size of the file itself.

On systems that have sufficient memory for receiving and storing an entire file before it is parsed, the embodiments herein are still advantageous because memory utilization is reduced, thus freeing memory for other purposes. Additionally, by receiving one block while parsing another, the overall latency involved with the receiving and parsing is reduced. Thus, some of the advantages of this approach include lower memory requirements, faster processing, and the ability to operate the parser on more devices.

Accordingly, a first aspect of the invention there is provided a method according to claim 1.

A second aspect of the invention there is provided a computing system according to claim 9.

In a third aspect there is provided an article of manufacture according claim 11.

These as well as other embodiments, aspects, advantages, and alternatives will become apparent to those of ordinary skill in the art by reading the following detailed description, with reference where appropriate to the accompanying drawings. Further, this summary and other descriptions and figures provided herein are intended to illustrate embodiments by way of example only and, as such, that numerous variations are possible. For instance, structural elements and process steps can be rearranged, combined, distributed, eliminated, or otherwise changed, while remaining within the scope of the embodiments as claimed.

### BRIEF DESCRIPTION OF THE DRAWINGS

Figure 1 illustrates a schematic drawing of a computing device, in accordance with example embodiments.
Figure 2 illustrates a schematic drawing of a server device cluster, in accordance with example embodiments.
Figure 3 depicts a remote network management architecture, in accordance with example embodiments.
Figure 4 depicts a communication environment involving a remote network management architecture, in accordance with example embodiments.
Figure 5A depicts another communication environment involving a remote network management architecture, in accordance with example embodiments.
Figure 5B is a flow chart, in accordance with example embodiments.
Figure 6 depicts a timing diagram of non-streaming and streaming parsers, in accordance with example embodiments.
Figure 7 depicts a definition of elements of a textual data-interchange file, in accordance with example embodiments.
Figure 8A depicts example parser-related files, in accordance with example embodiments.
Figure 8B depicts the relationship between record paths, records, and elements, in accordance with example embodiments.
Figure 9 depicts the input to and output from a parser, in accordance with example embodiments.
Figure 10 is a state diagram of a parser, in accordance with example embodiments.
Figure 11A depicts various arrangements of records and partial records within a block of a textual data-interchange file, in accordance with example embodiments.
Figure 11B also depicts various arrangements of records and partial records within a block of a textual data-interchange file, in accordance with example embodiments.
Figure 12 depicts a flow chart.

### DETAILED DESCRIPTION

Example methods, devices, and systems are described herein. It should be understood that the words "example" and "exemplary" are used herein to mean "serving as an example, instance, or illustration." Any embodiment or feature described herein as being an "example" or "exemplary" is not necessarily to be construed as preferred or advantageous over other embodiments or features unless stated as such. Thus, other embodiments can be utilized and other changes can be made without departing from the scope of the subject matter presented herein.

Accordingly, the example embodiments described herein are not meant to be limiting. It will be readily understood that the aspects of the present disclosure, as generally described herein, and illustrated in the figures, can be arranged, substituted, combined, separated, and designed in a wide variety of different configurations. For example, the separation of features into "client" and "server" components may occur in a number of ways.

Further, unless context suggests otherwise, the features illustrated in each of the figures may be used in combination with one another. Thus, the figures should be generally viewed as component aspects of one or more overall embodiments, with the understanding that not all illustrated features are necessary for each embodiment.

Additionally, any enumeration of elements, blocks, or steps in this specification or the claims is for purposes of clarity. Thus, such enumeration should not be interpreted to require or imply that these elements, blocks, or steps adhere to a particular arrangement or are carried out in a particular order.

### I. Introduction

A large enterprise 1s a complex entity with many interrelated operations. Some of these are found across the enterprise, such as human resources (HR), supply chain, information technology (IT), and finance. However, each enterprise also has its own unique operations that provide essential capabilities and/or create competitive advantages.

To support widely-implemented operations, enterprises typically use off-theshelf software applications, such as customer relationship management (CRM) and human capital management (HCM) packages. However, they may also need custom software applications to meet their own unique requirements. A large enterprise often has dozens or hundreds of these custom software applications. Nonetheless, the advantages provided by the embodiments herein are not limited to large enterprises and may be applicable to an enterprise, or any other type of organization, of any size.

Many such software applications are developed by individual departments within the enterprise. These range from simple spreadsheets to custom-built software tools and databases. But the proliferation of siloed custom software applications has numerous disadvantages. It negatively impacts an enterprise's ability to run and grow its operations, innovate, and meet regulatory requirements. The enterprise may find it difficult to integrate, streamline and enhance its operations due to lack of a single system that unifies its subsystems and data.

To efficiently create custom applications, enterprises would benefit from a remotely-hosted application platform that eliminates unnecessary development complexity. The goal of such a platform would be to reduce time-consuming, repetitive application development tasks so that software engineers and individuals in other roles can focus on developing unique, high-value features.

In order to achieve this goal, the concept of Application Platform as a Service (aPaaS) is introduced, to intelligently automate workflows throughout the enterprise. An aPaaS system is hosted remotely from the enterprise, but may access data, applications, and services within the enterprise by way of secure connections. Such an aPaaS system may have a number of advantageous capabilities and characteristics. These advantages and characteristics may be able to improve the enterprise's operations and workflow for IT, HR, CRM, customer service, application development, and security.

The aPaaS system may support development and execution of model-viewcontroller (MVC) applications. MVC applications divide their functionality into three interconnected parts (model, view, and controller) in order to isolate representations of information from the manner in which the information is presented to the user, thereby allowing for efficient code reuse and parallel development. These applications may be web-based, and offer create, read, update, delete (CRUD) capabilities. This allows new applications to be built on a common application infrastructure.

The aPaaS system may support standardized application components, such as a standardized set of widgets for graphical user interface (GUI) development. In this way, applications built using the aPaaS system have a common look and feel. Other software components and modules may be standardized as well. In some cases, this look and feel can be branded or skinned with an enterprise's custom logos and/or color schemes.

The aPaaS system may support the ability to configure the behavior of applications using metadata. This allows application behaviors to be rapidly adapted to meet specific needs. Such an approach reduces development time and increases flexibility. Further, the aPaaS system may support GUI tools that facilitate metadata creation and management, thus reducing errors in the metadata.

The aPaaS system may support clearly-defined interfaces between applications, so that software developers can avoid unwanted inter-application dependencies. Thus, the aPaaS system may implement a service layer in which persistent state information and other data is stored.

The aPaaS system may support a rich set of integration features so that the applications thereon can interact with legacy applications and third-party applications. For instance, the aPaaS system may support a custom employee-onboarding system that integrates with legacy HR, IT, and accounting systems.

The aPaaS system may support enterprise-grade security. Furthermore, since the aPaaS system may be remotely hosted, it should also utilize security procedures when it interacts with systems in the enterprise or third-party networks and services hosted outside of the enterprise. For example, the aPaaS system may be configured to share data amongst the enterprise and other parties to detect and identify common security threats.

Other features, functionality, and advantages of an aPaaS system may exist. This description is for purpose of example and is not intended to be limiting.

As an example of the aPaaS development process, a software developer may be tasked to create a new application using the aPaaS system. First, the developer may define the data model, which specifies the types of data that the application uses and the relationships therebetween. Then, via a GUI of the aPaaS system, the developer enters (e.g., uploads) the data model. The aPaaS system automatically creates all of the corresponding database tables, fields, and relationships, which can then be accessed via an object-oriented services layer.

In addition, the aPaaS system can also build a fully-functional MVC application with client-side interfaces and server-side CRUD logic. This generated application may serve as the basis of further development for the user. Advantageously, the developer does not have to spend a large amount of time on basic application functionality. Further, since the application may be web-based, it can be accessed from any Internetenabled client device. Alternatively or additionally, a local copy of the application may be able to be accessed, for instance, when Internet service is not available.

The aPaaS system may also support a rich set of pre-defined functionality that can be added to applications. These features include support for searching, email, templating, workflow design, reporting, analytics, social media, scripting, mobile-friendly output, and customized GUIs.

The following embodiments describe architectural and functional aspects of example aPaaS systems, as well as the features and advantages thereof.

### II. Example Computing Devices and Cloud-Based Computing Environments

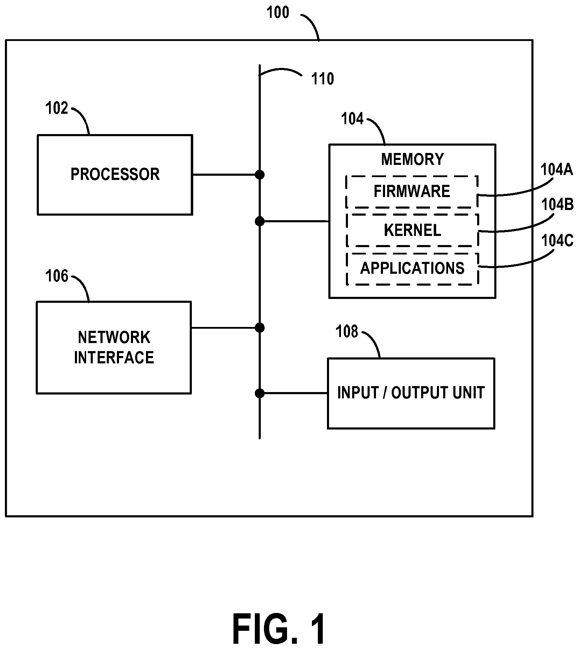

Figure 1 is a simplified block diagram exemplifying a computing device 100, illustrating some of the components that could be included in a computing device arranged to operate in accordance with the embodiments herein. Computing device 100 could be a client device (e.g., a device actively operated by a user), a server device (e.g., a device that provides computational services to client devices), or some other type of computational platform. Some server devices may operate as client devices from time to time in order to perform particular operations, and some client devices may incorporate server features.

In this example, computing device 100 includes processor 102, memory 104, network interface 106, and an input / output unit 108, all of which may be coupled by a system bus 110 or a similar mechanism. In some embodiments, computing device 100 may include other components and/or peripheral devices (e.g., detachable storage, printers, and so on).

Processor 102 may be one or more of any type of computer processing element, such as a central processing unit (CPU), a co-processor (e.g., a mathematics, graphics, or encryption co-processor), a digital signal processor (DSP), a network processor, and/or a form of integrated circuit or controller that performs processor operations. In some cases, processor 102 may be one or more single-core processors. In other cases, processor 102 may be one or more multi-core processors with multiple independent processing units. Processor 102 may also include register memory for temporarily storing instructions being executed and related data, as well as cache memory for temporarily storing recently-used instructions and data.

Memory 104 may be any form of computer-usable memory, including but not limited to random access memory (RAM), read-only memory (ROM), and non-volatile memory (e.g., flash memory, hard disk drives, solid state drives, compact discs (CDs), digital video discs (DVDs), and/or tape storage). Thus, memory 104 represents both main memory units, as well as long-term storage. Other types of memory may include biological memory.

Memory 104 may store program instructions and/or data on which program instructions may operate. By way of example, memory 104 may store these program instructions on a non-transitory, computer-readable medium, such that the instructions are executable by processor 102 to carry out any of the methods, processes, or operations disclosed in this specification or the accompanying drawings.

As shown in Figure 1, memory 104 may include firmware 104A, kernel 104B, and/or applications 104C. Firmware 104A may be program code used to boot or otherwise initiate some or all of computing device 100. Kernel 104B may be an operating system, including modules for memory management, scheduling and management of processes, input / output, and communication. Kernel 104B may also include device drivers that allow the operating system to communicate with the hardware modules (e.g., memory units, networking interfaces, ports, and busses), of computing device 100. Applications 104C may be one or more user-space software programs, such as web browsers or email clients, as well as any software libraries used by these programs. Memory 104 may also store data used by these and other programs and applications.

Network interface 106 may take the form of one or more wireline interfaces, such as Ethernet (e.g., Fast Ethernet, Gigabit Ethernet, and so on). Network interface 106 may also support communication over one or more non-Ethernet media, such as coaxial cables or power lines, or over wide-area media, such as Synchronous Optical Networking (SONET) or digital subscriber line (DSL) technologies. Network interface 106 may additionally take the form of one or more wireless interfaces, such as IEEE 802.11 (Wifi), BLUETOOTH^{®}, global positioning system (GPS), or a wide-area wireless interface. However, other forms of physical layer interfaces and other types of standard or proprietary communication protocols may be used over network interface 106. Furthermore, network interface 106 may comprise multiple physical interfaces. For instance, some embodiments of computing device 100 may include Ethernet, BLUETOOTH^{®}, and Wifi interfaces.

Input / output unit 108 may facilitate user and peripheral device interaction with computing device 100. Input / output unit 108 may include one or more types of input devices, such as a keyboard, a mouse, a touch screen, and so on. Similarly, input / output unit 108 may include one or more types of output devices, such as a screen, monitor, printer, and/or one or more light emitting diodes (LEDs). Additionally or alternatively, computing device 100 may communicate with other devices using a universal serial bus (USB) or highdefinition multimedia interface (HDMI) port interface, for example.

In some embodiments, one or more instances of computing device 100 may be deployed to support an aPaaS architecture. The exact physical location, connectivity, and configuration of these computing devices may be unknown and/or unimportant to client devices. Accordingly, the computing devices may be referred to as "cloud-based" devices that may be housed at various remote data center locations.

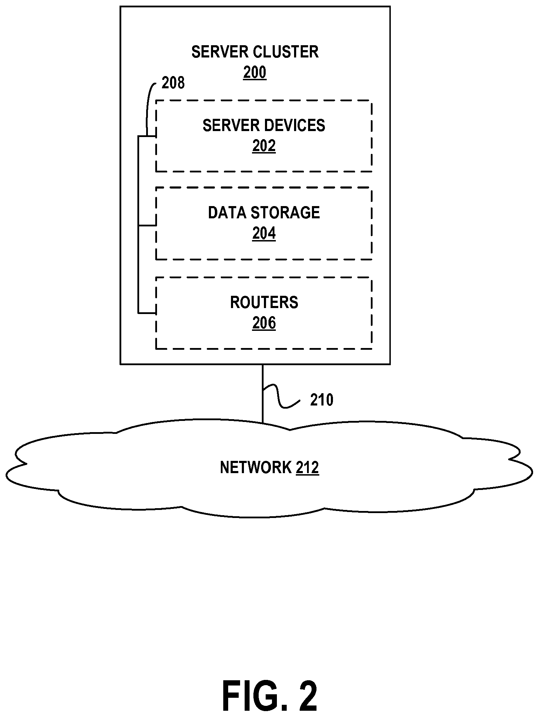

Figure 2 depicts a cloud-based server cluster 200 in accordance with example embodiments. In Figure 2, operations of a computing device (e.g., computing device 100) may be distributed between server devices 202, data storage 204, and routers 206, all of which may be connected by local cluster network 208. The number of server devices 202, data storages 204, and routers 206 in server cluster 200 may depend on the computing task(s) and/or applications assigned to server cluster 200.

For example, server devices 202 can be configured to perform various computing tasks of computing device 100. Thus, computing tasks can be distributed among one or more of server devices 202. To the extent that these computing tasks can be performed in parallel, such a distribution of tasks may reduce the total time to complete these tasks and return a result. For purpose of simplicity, both server cluster 200 and individual server devices 202 may be referred to as a "server device." This nomenclature should be understood to imply that one or more distinct server devices, data storage devices, and cluster routers may be involved in server device operations.

Data storage 204 may be data storage arrays that include drive array controllers configured to manage read and write access to groups of hard disk drives and/or solid state drives. The drive array controllers, alone or in conjunction with server devices 202, may also be configured to manage backup or redundant copies of the data stored in data storage 204 to protect against drive failures or other types of failures that prevent one or more of server devices 202 from accessing units of data storage 204. Other types of memory aside from drives may be used.

Routers 206 may include networking equipment configured to provide internal and external communications for server cluster 200. For example, routers 206 may include one or more packet-switching and/or routing devices (including switches and/or gateways) configured to provide (i) network communications between server devices 202 and data storage 204 via local cluster network 208, and/or (ii) network communications between the server cluster 200 and other devices via communication link 210 to network 212.

Additionally, the configuration of routers 206 can be based at least in part on the data communication requirements of server devices 202 and data storage 204, the latency and throughput of the local cluster network 208, the latency, throughput, and cost of communication link 210, and/or other factors that may contribute to the cost, speed, faulttolerance, resiliency, efficiency and/or other design goals of the system architecture.

As a possible example, data storage 204 may include any form of database, such as a structured query language (SQL) database. Various types of data structures may store the information in such a database, including but not limited to tables, arrays, lists, trees, and tuples. Furthermore, any databases in data storage 204 may be monolithic or distributed across multiple physical devices.

Server devices 202 may be configured to transmit data to and receive data from data storage 204. This transmission and retrieval may take the form of SQL queries or other types of database queries, and the output of such queries, respectively. Additional text, images, video, and/or audio may be included as well. Furthermore, server devices 202 may organize the received data into web page representations. Such a representation may take the form of a markup language, such as the hypertext markup language (HTML), the extensible markup language (XML), or some other standardized or proprietary format. Moreover, server devices 202 may have the capability of executing various types of computerized scripting languages, such as but not limited to Perl, Python, PHP Hypertext Preprocessor (PHP), Active Server Pages (ASP), JavaScript, and so on. Computer program code written in these languages may facilitate the providing of web pages to client devices, as well as client device interaction with the web pages.

### III. Example Remote Network Management Architecture

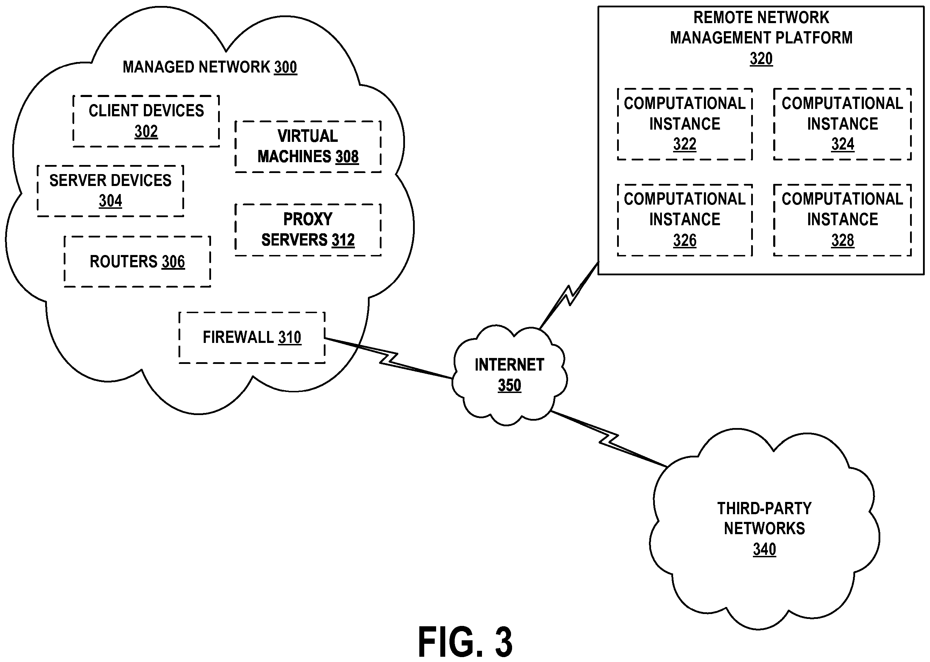

Figure 3 depicts a remote network management architecture, in accordance with example embodiments. This architecture includes three main components, managed network 300, remote network management platform 320, and third-party networks 340, all connected by way of Internet 350.

Managed network 300 may be, for example, an enterprise network used by an entity for computing and communications tasks, as well as storage of data. Thus, managed network 300 may include client devices 302, server devices 304, routers 306, virtual machines 308, firewall 310, and/or proxy servers 312. Client devices 302 may be embodied by computing device 100, server devices 304 may be embodied by computing device 100 or server cluster 200, and routers 306 may be any type of router, switch, or gateway.

Virtual machines 308 may be embodied by one or more of computing device 100 or server cluster 200. In general, a virtual machine is an emulation of a computing system, and mimics the functionality (e.g., processor, memory, and communication resources) of a physical computer. One physical computing system, such as server cluster 200, may support up to thousands of individual virtual machines. In some embodiments, virtual machines 308 may be managed by a centralized server device or application that facilitates allocation of physical computing resources to individual virtual machines, as well as performance and error reporting. Enterprises often employ virtual machines in order to allocate computing resources in an efficient, as needed fashion. Providers of virtualized computing systems include VMWARE^{®} and MICROSOFT^{®}.

Firewall 310 may be one or more specialized routers or server devices that protect managed network 300 from unauthorized attempts to access the devices, applications, and services therein, while allowing authorized communication that is initiated from managed network 300. Firewall 310 may also provide intrusion detection, web filtering, virus scanning, application-layer gateways, and other applications or services. In some embodiments not shown in Figure 3, managed network 300 may include one or more virtual private network (VPN) gateways with which it communicates with remote network management platform 320 (see below).

Managed network 300 may also include one or more proxy servers 312. An embodiment of proxy servers 312 may be a server device that facilitates communication and movement of data between managed network 300, remote network management platform 320, and third-party networks 340. In particular, proxy servers 312 may be able to establish and maintain secure communication sessions with one or more computational instances of remote network management platform 320. By way of such a session, remote network management platform 320 may be able to discover and manage aspects of the architecture and configuration of managed network 300 and its components. Possibly with the assistance of proxy servers 312, remote network management platform 320 may also be able to discover and manage aspects of third-party networks 340 that are used by managed network 300.

Firewalls, such as firewall 310, typically deny all communication sessions that are incoming by way of Internet 350, unless such a session was ultimately initiated from behind the firewall (i.e., from a device on managed network 300) or the firewall has been explicitly configured to support the session. By placing proxy servers 312 behind firewall 310 (e.g., within managed network 300 and protected by firewall 310), proxy servers 312 may be able to initiate these communication sessions through firewall 310. Thus, firewall 310 might not have to be specifically configured to support incoming sessions from remote network management platform 320, thereby avoiding potential security risks to managed network 300.

In some cases, managed network 300 may consist of a few devices and a small number of networks. In other deployments, managed network 300 may span multiple physical locations and include hundreds of networks and hundreds of thousands of devices. Thus, the architecture depicted in Figure 3 is capable of scaling up or down by orders of magnitude.

Furthermore, depending on the size, architecture, and connectivity of managed network 300, a varying number of proxy servers 312 may be deployed therein. For example, each one of proxy servers 312 may be responsible for communicating with remote network management platform 320 regarding a portion of managed network 300. Alternatively or additionally, sets of two or more proxy servers may be assigned to such a portion of managed network 300 for purposes of load balancing, redundancy, and/or high availability.

Remote network management platform 320 is a hosted environment that provides aPaaS services to users, particularly to the operators of managed network 300. These services may take the form of web-based portals, for instance. Thus, a user can securely access remote network management platform 320 from, for instance, client devices 302, or potentially from a client device outside of managed network 300. By way of the web-based portals, users may design, test, and deploy applications, generate reports, view analytics, and perform other tasks.

As shown in Figure 3, remote network management platform 320 includes four computational instances 322, 324, 326, and 328. Each of these instances may represent a set of web portals, services, and applications (e.g., a wholly-functioning aPaaS system) available to a particular customer. In some cases, a single customer may use multiple computational instances. For example, managed network 300 may be an enterprise customer of remote network management platform 320, and may use computational instances 322, 324, and 326. The reason for providing multiple instances to one customer is that the customer may wish to independently develop, test, and deploy its applications and services. Thus, computational instance 322 may be dedicated to application development related to managed network 300, computational instance 324 may be dedicated to testing these applications, and computational instance 326 may be dedicated to the live operation of tested applications and services. A computational instance may also be referred to as a hosted instance, a remote instance, a customer instance, or by some other designation. Any application deployed onto a computational instance may be a scoped application, in that its access to databases within the computational instance can be restricted to certain elements therein (e.g., one or more particular database tables or particular rows with one or more database tables).

The multi-instance architecture of remote network management platform 320 is in contrast to conventional multi-tenant architectures, over which multi-instance architectures exhibit several advantages. In multi-tenant architectures, data from different customers (e.g., enterprises) are comingled in a single database. While these customers' data are separate from one another, the separation is enforced by the software that operates the single database. As a consequence, a security breach in this system may impact all customers' data, creating additional risk, especially for entities subject to governmental, healthcare, and/or financial regulation. Furthermore, any database operations that impact one customer will likely impact all customers sharing that database. Thus, if there is an outage due to hardware or software errors, this outage affects all such customers. Likewise, if the database is to be upgraded to meet the needs of one customer, it will be unavailable to all customers during the upgrade process. Often, such maintenance windows will be long, due to the size of the shared database.

In contrast, the multi-instance architecture provides each customer with its own database in a dedicated computing instance. This prevents coming ling of customer data, and allows each instance to be independently managed. For example, when one customer's instance experiences an outage due to errors or an upgrade, other computational instances are not impacted. Maintenance down time is limited because the database only contains one customer's data. Further, the simpler design of the multi-instance architecture allows redundant copies of each customer database and instance to be deployed in a geographically diverse fashion. This facilitates high availability, where the live version of the customer's instance can be moved when faults are detected or maintenance is being performed.

In some embodiments, remote network management platform 320 may include one or more central instances, controlled by the entity that operates this platform. Like a computational instance, a central instance may include some number of physical or virtual servers and database devices. Such a central instance may serve as a repository for data that can be shared amongst at least some of the computational instances. For instance, definitions of common security threats that could occur on the computational instances, software packages that are commonly discovered on the computational instances, and/or an application store for applications that can be deployed to the computational instances may reside in a central instance. Computational instances may communicate with central instances by way of well-defined interfaces in order to obtain this data.

In order to support multiple computational instances in an efficient fashion, remote network management platform 320 may implement a plurality of these instances on a single hardware platform. For example, when the aPaaS system is implemented on a server cluster such as server cluster 200, it may operate a virtual machine that dedicates varying amounts of computational, storage, and communication resources to instances. But full virtualization of server cluster 200 might not be necessary, and other mechanisms may be used to separate instances. In some examples, each instance may have a dedicated account and one or more dedicated databases on server cluster 200. Alternatively, computational instance 322 may span multiple physical devices.

In some cases, a single server cluster of remote network management platform 320 may support multiple independent enterprises. Furthermore, as described below, remote network management platform 320 may include multiple server clusters deployed in geographically diverse data centers in order to facilitate load balancing, redundancy, and/or high availability.

Third-party networks 340 may be remote server devices (e.g., a plurality of server clusters such as server cluster 200) that can be used for outsourced computational, data storage, communication, and service hosting operations. These servers may be virtualized (i.e., the servers may be virtual machines). Examples of third-party networks 340 may include AMAZON WEB SERVICES^{®} and MICROSOFT^{®} Azure. Like remote network management platform 320, multiple server clusters supporting third-party networks 340 may be deployed at geographically diverse locations for purposes of load balancing, redundancy, and/or high availability.

Managed network 300 may use one or more of third-party networks 340 to deploy applications and services to its clients and customers. For instance, if managed network 300 provides online music streaming services, third-party networks 340 may store the music files and provide web interface and streaming capabilities. In this way, the enterprise of managed network 300 does not have to build and maintain its own servers for these operations.

Remote network management platform 320 may include modules that integrate with third-party networks 340 to expose virtual machines and managed services therein to managed network 300. The modules may allow users to request virtual resources and provide flexible reporting for third-party networks 340. In order to establish this functionality, a user from managed network 300 might first establish an account with third-party networks 340, and request a set of associated resources. Then, the user may enter the account information into the appropriate modules of remote network management platform 320. These modules may then automatically discover the manageable resources in the account, and also provide reports related to usage, performance, and billing.

Internet 350 may represent a portion of the global Internet. However, Internet 350 may alternatively represent a different type of network, such as a private wide-area or local-area packet-switched network.

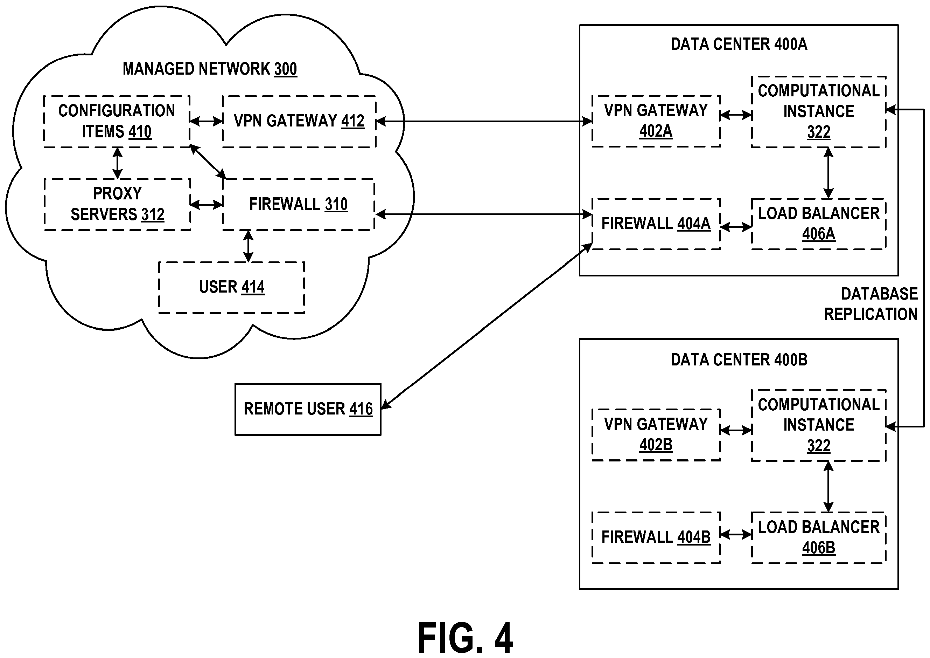

Figure 4 further illustrates the communication environment between managed network 300 and computational instance 322, and introduces additional features and alternative embodiments. In Figure 4, computational instance 322 is replicated across data centers 400A and 400B. These data centers may be geographically distant from one another, perhaps in different cities or different countries. Each data center includes support equipment that facilitates communication with managed network 300, as well as remote users.

In data center 400A, network traffic to and from external devices flows either through VPN gateway 402A or firewall 404A. VPN gateway 402A may be peered with VPN gateway 412 of managed network 300 by way of a security protocol such as Internet Protocol Security (IPSEC) or Transport Layer Security (TLS). Firewall 404A may be configured to allow access from authorized users, such as user 414 and remote user 416, and to deny access to unauthorized users. By way of firewall 404A, these users may access computational instance 322, and possibly other computational instances. Load balancer 406A may be used to distribute traffic amongst one or more physical or virtual server devices that host computational instance 322. Load balancer 406A may simplify user access by hiding the internal configuration of data center 400A, (e.g., computational instance 322) from client devices. For instance, if computational instance 322 includes multiple physical or virtual computing devices that share access to multiple databases, load balancer 406A may distribute network traffic and processing tasks across these computing devices and databases so that no one computing device or database is significantly busier than the others. In some embodiments, computational instance 322 may include VPN gateway 402A, firewall 404A, and load balancer 406A.

Data center 400B may include its own versions of the components in data center 400A. Thus, VPN gateway 402B, firewall 404B, and load balancer 406B may perform the same or similar operations as VPN gateway 402A, firewall 404A, and load balancer 406A, respectively. Further, by way of real-time or near-real-time database replication and/or other operations, computational instance 322 may exist simultaneously in data centers 400A and 400B.

Data centers 400A and 400B as shown in Figure 4 may facilitate redundancy and high availability. In the configuration of Figure 4, data center 400A is active and data center 400B is passive. Thus, data center 400A is serving all traffic to and from managed network 300, while the version of computational instance 322 in data center 400B is being updated in near-real-time. Other configurations, such as one in which both data centers are active, may be supported.

Should data center 400A fail in some fashion or otherwise become unavailable to users, data center 400B can take over as the active data center. For example, domain name system (DNS) servers that associate a domain name of computational instance 322 with one or more Internet Protocol (IP) addresses of data center 400A may re-associate the domain name with one or more IP addresses of data center 400B. After this re-association completes (which may take less than one second or several seconds), users may access computational instance 322 by way of data center 400B.

Figure 4 also illustrates a possible configuration of managed network 300. As noted above, proxy servers 312 and user 414 may access computational instance 322 through firewall 310. Proxy servers 312 may also access configuration items 410. In Figure 4, configuration items 410 may refer to any or all of client devices 302, server devices 304, routers 306, and virtual machines 308, any applications or services executing thereon, as well as relationships between devices, applications, and services. Thus, the term "configuration items" may be shorthand for any physical or virtual device, or any application or service remotely discoverable or managed by computational instance 322, or relationships between discovered devices, applications, and services. Configuration items may be represented in a configuration management database (CMDB) of computational instance 322.

As noted above, VPN gateway 412 may provide a dedicated VPN to VPN gateway 402A. Such a VPN may be helpful when there is a significant amount of traffic between managed network 300 and computational instance 322, or security policies otherwise suggest or require use of a VPN between these sites. In some embodiments, any device in managed network 300 and/or computational instance 322 that directly communicates via the VPN is assigned a public IP address. Other devices in managed network 300 and/or computational instance 322 may be assigned private IP addresses (e.g., IP addresses selected from the 10.0.0.0 - 10.255.255.255 or 192.168.0.0 - 192.168.255.255 ranges, represented in shorthand as subnets 10.0.0.0/8 and 192.168.0.0/16, respectively).

### IV. Example Device, Application, and Service Discovery

In order for remote network management platform 320 to administer the devices, applications, and services of managed network 300, remote network management platform 320 may first determine what devices are present in managed network 300, the configurations and operational statuses of these devices, and the applications and services provided by the devices, and well as the relationships between discovered devices, applications, and services. As noted above, each device, application, service, and relationship may be referred to as a configuration item. The process of defining configuration items within managed network 300 is referred to as discovery, and may be facilitated at least in part by proxy servers 312.

For purpose of the embodiments herein, an "application" may refer to one or more processes, threads, programs, client modules, server modules, or any other software that executes on a device or group of devices. A "service" may refer to a high-level capability provided by multiple applications executing on one or more devices working in conjunction with one another. For example, a high-level web service may involve multiple web application server threads executing on one device and accessing information from a database application that executes on another device.

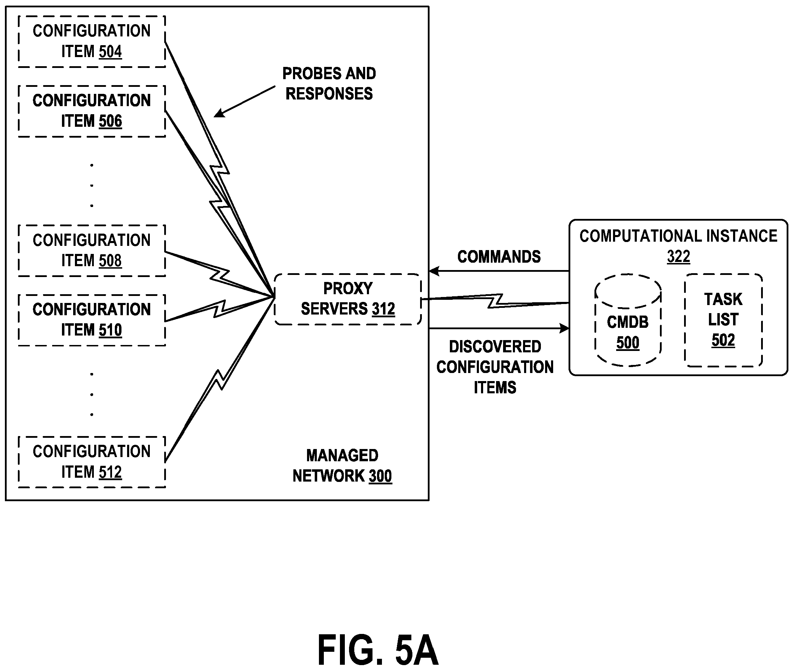

Figure 5A provides a logical depiction of how configuration items can be discovered, as well as how information related to discovered configuration items can be stored. For sake of simplicity, remote network management platform 320, third-party networks 340, and Internet 350 are not shown.

In Figure 5A, CMDB 500 and task list 502 are stored within computational instance 322. Computational instance 322 may transmit discovery commands to proxy servers 312. In response, proxy servers 312 may transmit probes to various devices, applications, and services in managed network 300. These devices, applications, and services may transmit responses to proxy servers 312, and proxy servers 312 may then provide information regarding discovered configuration items to CMDB 500 for storage therein. Configuration items stored in CMDB 500 represent the environment of managed network 300.

Task list 502 represents a list of activities that proxy servers 312 are to perform on behalf of computational instance 322. As discovery takes place, task list 502 is populated. Proxy servers 312 repeatedly query task list 502, obtain the next task therein, and perform this task until task list 502 is empty or another stopping condition has been reached.

To facilitate discovery, proxy servers 312 may be configured with information regarding one or more subnets in managed network 300 that are reachable by way of proxy servers 312. For instance, proxy servers 312 may be given the IP address range 192.168.0/24 as a subnet. Then, computational instance 322 may store this information in CMDB 500 and place tasks in task list 502 for discovery of devices at each of these addresses.

Figure 5A also depicts devices, applications, and services in managed network 300 as configuration items 504, 506, 508, 510, and 512. As noted above, these configuration items represent a set of physical and/or virtual devices (e.g., client devices, server devices, routers, or virtual machines), applications executing thereon (e.g., web servers, email servers, databases, or storage arrays), relationships therebetween, as well as services that involve multiple individual configuration items.

Placing the tasks in task list 502 may trigger or otherwise cause proxy servers 312 to begin discovery. Alternatively or additionally, discovery may be manually triggered or automatically triggered based on triggering events (e.g., discovery may automatically begin once per day at a particular time).

In general, discovery may proceed in four logical phases: scanning, classification, identification, and exploration. Each phase of discovery involves various types of probe messages being transmitted by proxy servers 312 to one or more devices in managed network 300. The responses to these probes may be received and processed by proxy servers 312, and representations thereof may be transmitted to CMDB 500. Thus, each phase can result in more configuration items being discovered and stored in CMDB 500.

In the scanning phase, proxy servers 312 may probe each IP address in the specified range of IP addresses for open Transmission Control Protocol (TCP) and/or User Datagram Protocol (UDP) ports to determine the general type of device. The presence of such open ports at an IP address may indicate that a particular application is operating on the device that is assigned the IP address, which in turn may identify the operating system used by the device. For example, if TCP port 135 is open, then the device is likely executing a WINDOWS^{®} operating system. Similarly, if TCP port 22 is open, then the device is likely executing a UNIX^{®} operating system, such as LINUX^{®}. If UDP port 161 is open, then the device may be able to be further identified through the Simple Network Management Protocol (SNMP). Other possibilities exist. Once the presence of a device at a particular IP address and its open ports have been discovered, these configuration items are saved in CMDB 500.

In the classification phase, proxy servers 312 may further probe each discovered device to determine the version of its operating system. The probes used for a particular device are based on information gathered about the devices during the scanning phase. For example, if a device is found with TCP port 22 open, a set of UNIX^{®}-specific probes may be used. Likewise, if a device is found with TCP port 135 open, a set of WINDOWS@-specific probes may be used. For either case, an appropriate set of tasks may be placed in task list 502 for proxy servers 312 to carry out. These tasks may result in proxy servers 312 logging on, or otherwise accessing information from the particular device. For instance, if TCP port 22 is open, proxy servers 312 may be instructed to initiate a Secure Shell (SSH) connection to the particular device and obtain information about the operating system thereon from particular locations in the file system. Based on this information, the operating system may be determined. As an example, a UNIX^{®} device with TCP port 22 open may be classified as AIX^{®}, HPUX, LINUX^{®}, MACOS^{®}, or SOLARIS^{®}. This classification information may be stored as one or more configuration items in CMDB 500.

In the identification phase, proxy servers 312 may determine specific details about a classified device. The probes used during this phase may be based on information gathered about the particular devices during the classification phase. For example, if a device was classified as LINUX^{®}, a set of LINUX^{®}-specific probes may be used. Likewise if a device was classified as WINDOWS^{®} 2012, as a set of WINDOWS^{®}-2012-specific probes may be used. As was the case for the classification phase, an appropriate set of tasks may be placed in task list 502 for proxy servers 312 to carry out. These tasks may result in proxy servers 312 reading information from the particular device, such as basic input / output system (BIOS) information, serial numbers, network interface information, media access control address(es) assigned to these network interface(s), IP address(es) used by the particular device and so on. This identification information may be stored as one or more configuration items in CMDB 500.

In the exploration phase, proxy servers 312 may determine further details about the operational state of a classified device. The probes used during this phase may be based on information gathered about the particular devices during the classification phase and/or the identification phase. Again, an appropriate set of tasks may be placed in task list 502 for proxy servers 312 to carry out. These tasks may result in proxy servers 312 reading additional information from the particular device, such as processor information, memory information, lists of running processes (applications), and so on. Once more, the discovered information may be stored as one or more configuration items in CMDB 500.

Running discovery on a network device, such as a router, may utilize SNMP. Instead of or in addition to determining a list of running processes or other application-related information, discovery may determine additional subnets known to the router and the operational state of the router's network interfaces (e.g., active, inactive, queue length, number of packets dropped, etc.). The IP addresses of the additional subnets may be candidates for further discovery procedures. Thus, discovery may progress iteratively or recursively.

Once discovery completes, a snapshot representation of each discovered device, application, and service is available in CMDB 500. For example, after discovery, operating system version, hardware configuration and network configuration details for client devices, server devices, and routers in managed network 300, as well as applications executing thereon, may be stored. This collected information may be presented to a user in various ways to allow the user to view the hardware composition and operational status of devices, as well as the characteristics of services that span multiple devices and applications.

Furthermore, CMDB 500 may include entries regarding dependencies and relationships between configuration items. More specifically, an application that is executing on a particular server device, as well as the services that rely on this application, may be represented as such in CMDB 500. For instance, suppose that a database application is executing on a server device, and that this database application is used by a new employee onboarding service as well as a payroll service. Thus, if the server device is taken out of operation for maintenance, it is clear that the employee onboarding service and payroll service will be impacted. Likewise, the dependencies and relationships between configuration items may be able to represent the services impacted when a particular router fails.

In general, dependencies and relationships between configuration items may be displayed on a web-based interface and represented in a hierarchical fashion. Thus, adding, changing, or removing such dependencies and relationships may be accomplished by way of this interface.

Furthermore, users from managed network 300 may develop workflows that allow certain coordinated activities to take place across multiple discovered devices. For instance, an IT workflow might allow the user to change the common administrator password to all discovered LINUX^{®} devices in single operation.

In order for discovery to take place in the manner described above, proxy servers 312, CMDB 500, and/or one or more credential stores may be configured with credentials for one or more of the devices to be discovered. Credentials may include any type of information needed in order to access the devices. These may include userid / password pairs, certificates, and so on. In some embodiments, these credentials may be stored in encrypted fields of CMDB 500. Proxy servers 312 may contain the decryption key for the credentials so that proxy servers 312 can use these credentials to log on to or otherwise access devices being discovered.

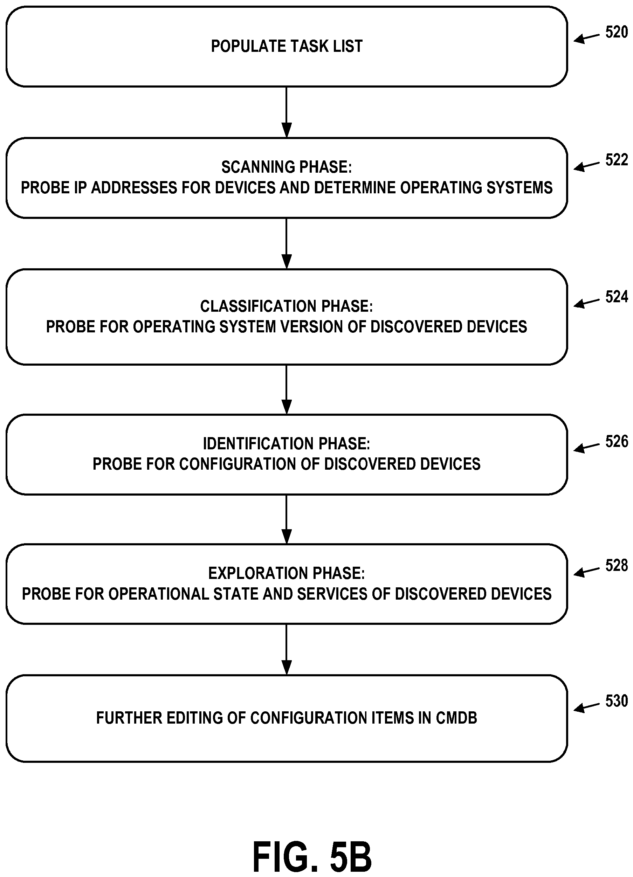

The discovery process is depicted as a flow chart in Figure 5B. At block 520, the task list in the computational instance is populated, for instance, with a range of IP addresses. At block 522, the scanning phase takes place. Thus, the proxy servers probe the IP addresses for devices using these IP addresses, and attempt to determine the operating systems that are executing on these devices. At block 524, the classification phase takes place. The proxy servers attempt to determine the operating system version of the discovered devices. At block 526, the identification phase takes place. The proxy servers attempt to determine the hardware and/or software configuration of the discovered devices. At block 528, the exploration phase takes place. The proxy servers attempt to determine the operational state and applications executing on the discovered devices. At block 530, further editing of the configuration items representing the discovered devices and applications may take place. This editing may be automated and/or manual in nature.

The blocks represented in Figure 5B are for purpose of example. Discovery may be a highly configurable procedure that can have more or fewer phases, and the operations of each phase may vary. In some cases, one or more phases may be customized, or may otherwise deviate from the exemplary descriptions above.

### V. Streaming Parsers

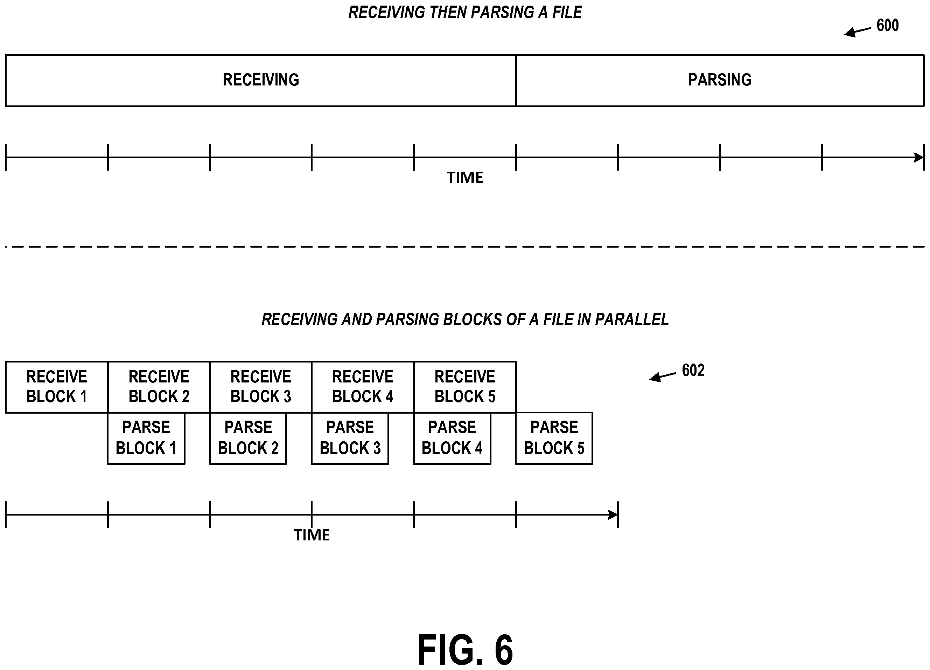

As noted above, a streaming parser for human-readable data-interchange files can both decrease memory utilization and increase the speed at which these files are processed. An illustrative example is provided in Figure 6.

Scenario 600 represents receiving and parsing a file. The receiving takes 5 units of time and the parsing takes 4 units of time. The parsing begins when the receiving is complete, so the processing as a whole takes 9 units of time.

Scenario 602 represents receiving and parsing the same file on a block by block basis. The file is divided into 5 blocks in this example, but divisions into more or fewer blocks may be used. After each block is received, it is parsed while the next block (if available) is received. Thus, the reception and parsing of these blocks overlaps. Advantageously, the total time needed to receive and parse the file is reduced to less than 6 units of time, representing an improvement of over 33%. Another advantage is that elements from any received record are available for further processing in real time or near real time and before the entire file is received. This is in contrast to non-streaming techniques, where these elements are not available until the entire file is received.

Furthermore, the memory required at any point in time is just slightly greater than the maximum size of a record, constituting the internal working buffer of the parser. The choices of block size and buffer size are independent as long as block size is no greater than buffer size. Optimal ratios between the two may be integral multiples, e.g., buffer size being 3 or 4 times the block size. Choice of block size may have no direct dependence on record size.

In Figure 6, it is assumed that task switching time is negligible and that receiving and parsing can occur in parallel. However, even if these assumptions are lifted, the approach of scenario 602 can still dramatically reduce memory utilization. This approach is particularly helpful for computational instances of a remote network management platform, because of the memory demands that concurrent operation of multiple applications can place on these instances. But these embodiments can be used with memory-constrained devices as well, such as IOT devices.

It is also assumed that the amount of memory used in the networking stack of the receiving device can be controlled by only reading from the stack when there is application-space memory to do so, or by limiting the number and size of TCP buffers. This can result in backpressure being applied to the transmitting device (e.g., by way of TCP congestion control and avoidance algorithms) so that the rate at which the transmitting device sends data is roughly commensurate to the rate at which it can be processed by the receiving device.

### VI. JavaScript Object Notation (JSON) Definition and Parsing

As noted above, the embodiments herein relate to increasing the efficiency and reducing the memory utilization of files encoded in various human-readable data-interchange formats. JSON, an example of such a format, is used herein for purpose of illustration. Nonetheless, the embodiments herein may be used with other types of formats as well. JSON is commonly used to format textual information that is communicated between a web client and web server, such as representational state transfer (REST) transactions. But JSON can also be used for inter-application communication in general, between applications on the same computing device and/or between two or more computing devices.

JSON supports recursive hierarchical nesting of objects and arrays. A JSON object is an unordered set of name / value pairs that begins with a left brace ("{") and ends with a right brace ("}"). Each name / value pair in an object is separated by a comma. JSON arrays are ordered sets of values that begin with a left bracket ("[") and end with a right bracket ("]"). The values in an array are separated by commas. Values may be character strings, numbers, Boolean values, or null values, as well as objects or arrays (thus enabling the recursive hierarchical nesting). The name part of a name / value pair is also a character string. Any amount of whitespace can be placed between these items.

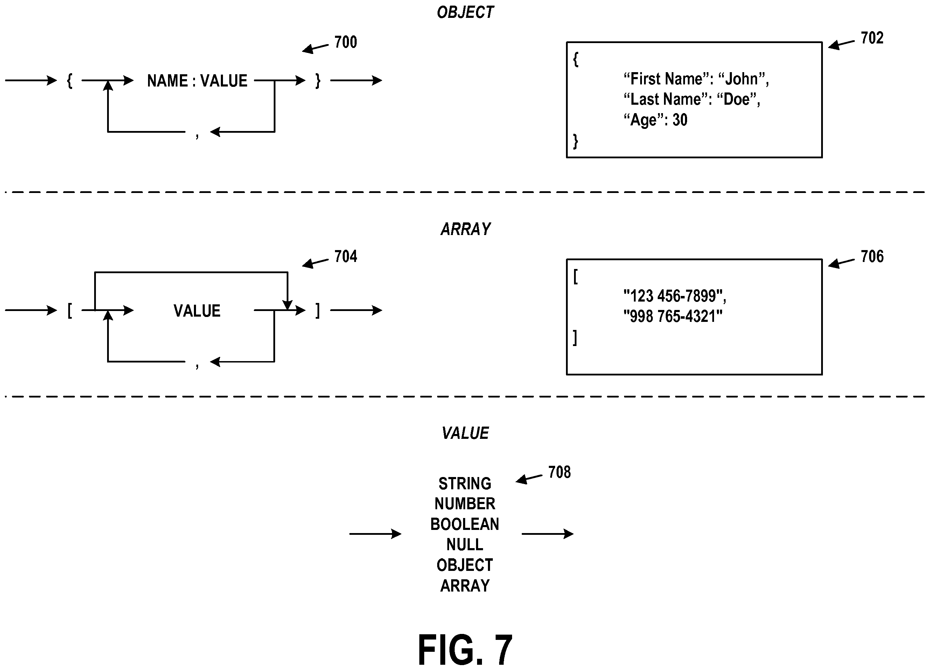

Figure 7 depicts formal language definitions and an associated example of JSON. Diagram 700 provides a formal definition of an object, diagram 704 provides a formal definition of an array, and diagram 708 provides a formal definition of a value. Example 702 is of an object containing three name / value pairs for the first name, last name and age, respectively, of an individual. Example 706 is of an array containing two values for phone numbers. Both of these examples are fully encapsulated by braces and brackets, respectively. Thus, they are completely defined and may be referred to as records. In other words, records in JSON files are delimited by an open brace and a corresponding close brace, or an open bracket and a corresponding close bracket. Objects, arrays, values, and/or any combination thereof may be referred to as elements.

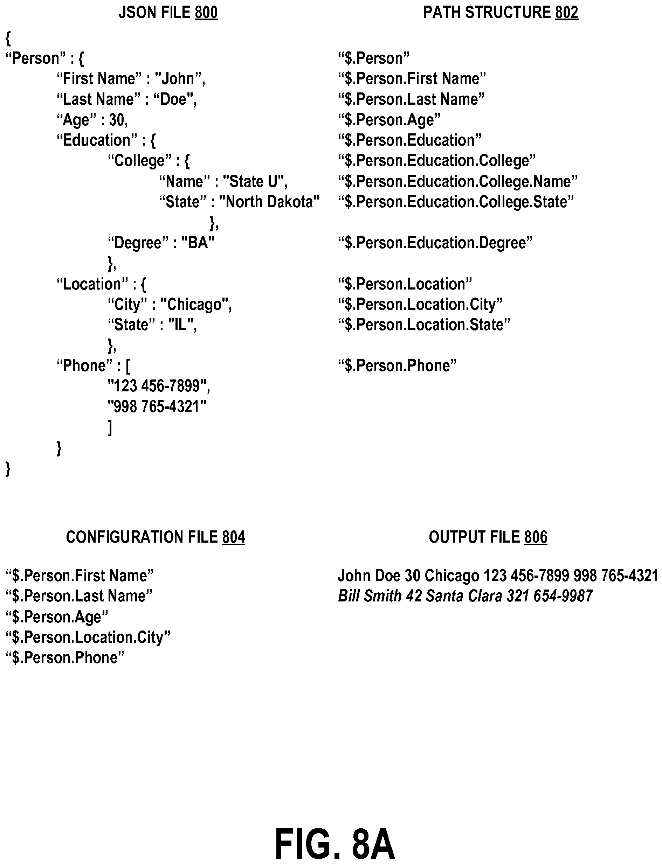

Most elements within a record can be uniquely identified by a path. The path may be represented as a concatenation of the nested objects and arrays that can be used to locate a specific element within the JSON file. For instance, in Figure 8A, JSON file 800 defines a "Person" object with various nested objects and arrays. Path structure 802 defines the corresponding paths for each, object, array, and value in JSON file 800. For instance, the person's first name ("John") can be found at "$.Person.First Name", the person's age (30) can be found at "$.Person.Age" and the person's degree ("BA") can be found at "$.Person.Education.Degree" (in this syntax, a path always begins with "$." and element names are separated by a "."). In some cases, a record path may define a set of JSON objects with paths of interest.

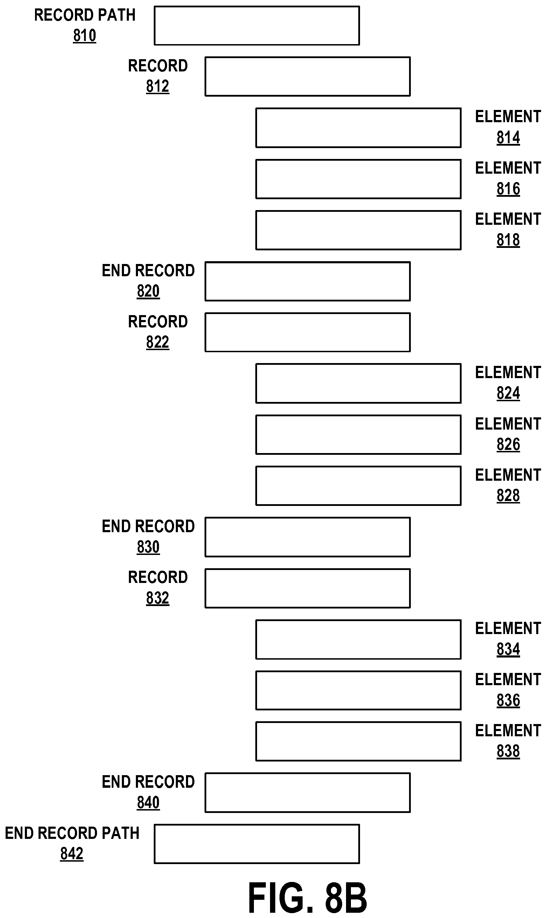

Figure 8B illustrates the relationship between record paths, records, and elements in a JSON file. Particularly, record path 810 and end record path 842 contain a set of records. These records are defined by record 812 and end record 820 (referred to collectively as "record 812"), record 822 and end record 830 (referred to collectively as "record 822"), and record 832 and end record 840 (referred to collectively as "record 832"). Elements 814, 816, and 818 are contained within record 812, elements 824, 826, and 828 are contained within record 822, and elements 834, 836, and 838 are contained within record 832. Each of the records can be referenced by a path.

Using record paths and paths can be advantageous when parsing a JSON file, because not all elements may be of interest and paths can be used to define the elements that are of interest. For example, given objects of the type "Person" as defined in JSON file 800, the elements of interest might only be the person's first name, last name, age, city, and phone number(s). An application may be configured to extract just these values and write them to a file or a database table.

In order to acquire the values from a file with one or more "Person" objects, a parser may be configured with the relevant paths as input. For instance, the parser may be given the paths in configuration file 804, as well as direction to output the values associated with these paths in a single line of text per record with each value separated by a space character. This would produce the corresponding output file 806.

In other words, the parser scanned JSON file 800 for the value associated with the path "$.Person.First Name", found "John", and wrote that to output file 806. Similarly, the parser scanned JSON file 800 for the value associated with the path "$.Person.Last Name", found "Doe", and wrote that to output file 806 prepended with a space character. This process continues until all paths in configuration file 804 for all records are parsed. Thus, if JSON file 800 contains another "Person" entry for Bill Smith, 42 years of age, living in Santa Clara with a phone number of 321 654-9987, that information would be written to output file 806 in a separate line of text (this line of text is shown italicized to reflect that the corresponding data is not shown in JSON file 800). This means that output file 806 may contain one line of text per "Person" defined in JSON file 800.

Alternatively or additionally, the output from the parser can be mapped to specific columns of one or more database tables. As an example, a database table with columns for first name, last name, age, city, and phone numbers could be defined, and configuration file 804 (or some other file or data structure) may contain a mapping from each path to a column. In this way, the database tables can be populated with the elements of interest from JSON file 800.

Notably, the paths in configuration file 804 may be stored in various ways and therefore an actual configuration file might not be required. For instance, the paths may be stored in application memory, a database, etc.

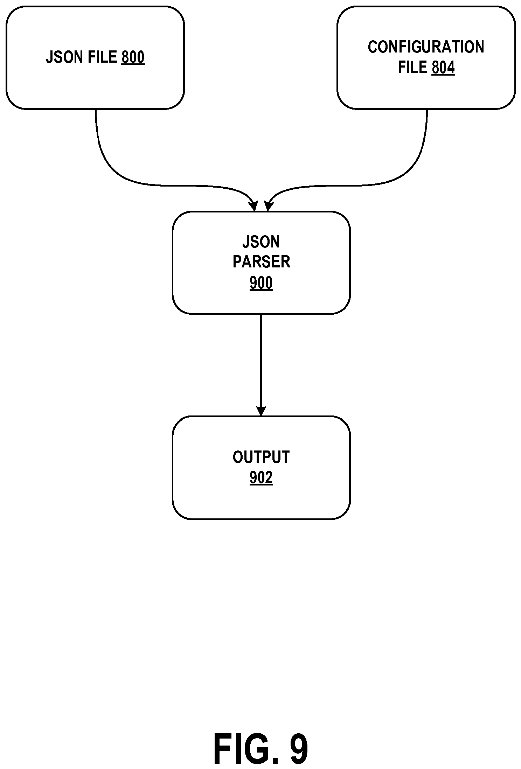

Figure 9 summarizes this process. JSON parser 900 receives input from JSON file 800 and configuration file 804. As noted above, configuration file 804 may contain paths of interest that are defined in JSON file 800. Based on the content of these files, JSON parser 900 may produce output 902, which may be a representation of the content within JSON file 800 at the locations specified by the paths of interest. Output 902 may take the form of a file, entries in a database, or some other arrangement.

### VII. Streaming JSON Parser

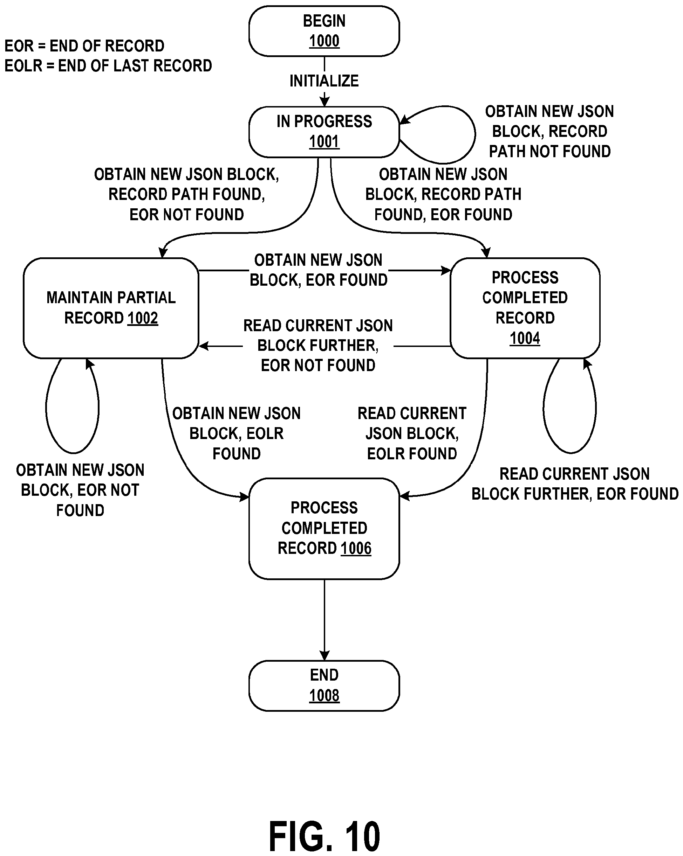

Figure 10 depicts a state machine for a streaming JSON parser. As noted above, a parser receives data from a JSON file (e.g., by way of a network connection) in blocks, and processes each block accordingly. In some embodiments, the parser may be parsing one block while receiving another block.

Even if the parser can control the size of the blocks to some extent, the parser likely cannot control whether a block ends with complete a JSON record. For example, an object, array, or value may begin in one block and end in a subsequent block. Thus, the parser should be able to handle these situations.

In the context of Figure 10, the acronym EOR is used to refer to the end of a record (e.g., an end brace or end bracket), and the acronym EOLR is used to refer to the end of the last record in the JSON file (e.g., an end brace or end bracket of the last record in the file with any elements of interest).

The parser begins in state 1000. For example, the parser may read a configuration file containing a specification of one or more record paths and/or paths of interest, among other activities. As the parser initializes, it transitions to state 1001. While in state 1001, the parser obtains and processes blocks of the JSON file, looking for the first record, indicated by the record path. As long as the position indicated by the record path is not found, the parser continues obtaining and processing blocks in state 1001 (a self-transition).

After obtaining a block of the JSON file containing the position indicated by the record path, the parser determines whether there is an EOR found in the current block. If an FOR is not found, the parser transitions to state 1002. If an EOR is found, the parser transitions to state 1004.

In state 1002, the most-recently obtained block did not yield enough data to form a complete record. Therefore, the parser maintains the partial record received so far, and then obtains the subsequent block. There are three possible transitions from state 1012. If the subsequent block includes an EOR, the parser transitions to state 1004. If the subsequent block contains an EOLR (and no other EOR), the parser transitions to state 1006. If the subsequent block ends without an EOR being found, the parser stays in state 1002 (a self-transition) and then obtains yet another block.

In state 1004, the most-recently obtained block yielded enough data to form at least one complete record. The parser processes the first of these complete record(s) (e.g., provides a map of key-value pairs within the record). The processed record is then removed from the internal buffer. There are three possible transitions from state 1004. If the current block includes another EOR, the parser stays in state 1004 (a self-transition) and processes a subsequent record. If the current block does not include another EOR, the parser transitions to state 1002. If the current block contains an EOLR (and no other EOR), the parser transitions to state 1006.

When the parser is in state 1006, the EOLR has been found, which also indicates that there are no more records to be processed past this block. Thus, the parser processes the final record and then transitions to state 1008 where the parsing terminates.

As noted above, an end-of-file (EOF) can occur at any point during the processing of a JSON file. Upon reading an EOF, the parser may immediately terminate or process any complete records and then terminate.

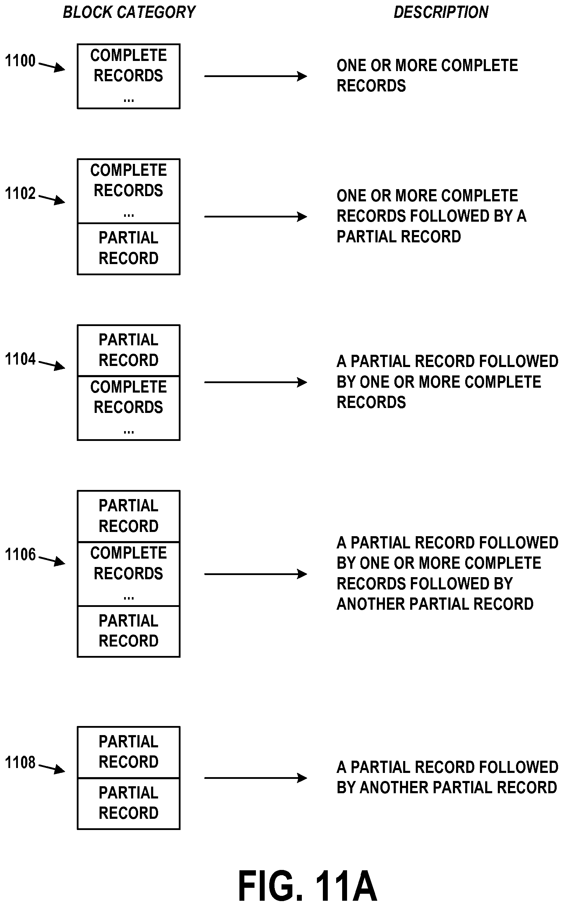

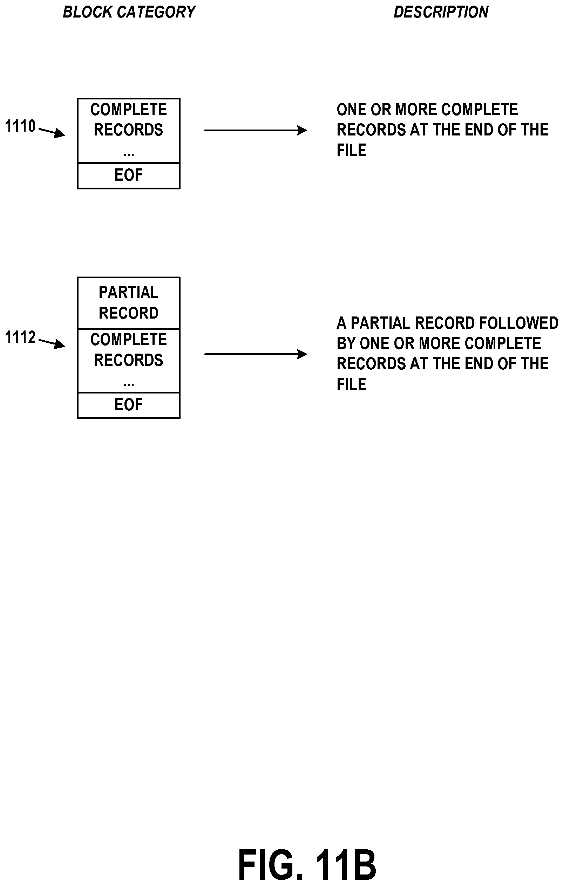

Figures 11A and 11B further illustrate the contents of blocks that the parser would handle. Several categories of blocks are introduced and the parsing of each is discussed. Note that the categories discussed herein might not be exhaustive or complete, and other categories may exist. Since block size and record size may vary, there is no guarantee that an integral number of records may be contained within each block. Thus, the parser should handle at least some situations where records are split across blocks. In Figures 11A and 11B, the block category is on the left and a description thereof is on the right.

Category 1100 is for blocks that contain only one or more complete records and no partial records. After parsing such a block, the elements of interest (e.g., as defined by paths in a configuration file) of each of these records are provided as output.

Category 1102 is for blocks that contain one or more complete records followed by a partial record. After parsing such a block, the elements of interest of each of the complete records are provided as output, and the partial record (or elements of interest therein) is placed in temporary storage. It is assumed that at least some of the remainder of the partial record will be present in the next block.

Category 1104 is for blocks that contain a partial record followed by one or more complete records. It is assumed that another partial record corresponding to the partial record of the block is in temporary storage. These two partial records are concatenated to form a complete record. The elements of interest of each of the complete records (including the one just formed) are provided as output.

Category 1106 is for blocks that contain a first partial record followed by one or more complete records followed by a second partial record. It is assumed that another partial record corresponding to the first partial record of the block is in temporary storage. These two partial records are concatenated to form a complete record. The elements of interest of each of the complete records (including the one just formed) are provided as output. The second partial record of the block (or elements of interest therein) is placed in temporary storage. It is assumed that some or the rest of the second partial record will be present in the next block.

Category 1108 is for blocks that contain a first partial record followed by a second partial record. It is assumed that another partial record corresponding to the first partial record of the block is in temporary storage. These two partial records are concatenated to form a complete record, and the elements of interest in this complete record are provided as output. The second partial record of the block (or elements of interest therein) is placed in temporary storage. It is assumed that some or the rest of the second partial record will be present in the next block.

It should be noted that it is possible for an entire block to contain a partial record that began in a previous block and ends in a subsequent block. This scenario when the record size exceeds the block size, and is not specifically depicted in Figure 11A. Nonetheless, in such a scenario, this partial record would be added to a corresponding partial record already in temporary storage, and then the next block would be processed.

Turning to Figure 11B, category 1110 is for blocks that contain one or more complete records followed by an EOF. After parsing such a block, the elements of interest of each of these records are provided as output, and then the parsing ends.

Category 1112 is for blocks that contain a partial record followed by one or more complete records. It is assumed that another partial record corresponding to the partial record of the block is in temporary storage. These two partial records are concatenated to form a complete record. The elements of interest of each of the complete records (including the one just formed) are provided as output. Then, the parsing ends.

While it is possible for the last record of a file to be a partial record (e.g., the file ends in the middle of a record), this scenario would likely be considered an error. Thus, the partial record would likely be discarded or logged for debugging purposes.

Based on these observations, a bound on the amount of memory used by a streaming parser can be derived as follows. The parser maintains, in temporary storage, an internal buffer the contents of which include recently received blocks, and the size of which may be chosen such that: (1) it can contain at least one complete record, and (2) is optimally an integral multiple of the block size. It is assumed that the parser can control the number of blocks being received while the current block is being processed by reading at most one block from its networking stack at a time (and as noted above, the networking stack can limit the amount of storage it uses for incoming blocks by limiting available TCP/IP capacity).

Thus, temporary storage for one block may be required at the parser. Further, to handle partial records, temporary storage for the internal buffer may be required at the parser. Therefore, the upper bound on memory usage by the streaming parser is , where is the internal buffer size and is the record block size. In contrast, a conventional, non-streaming parser will require memory usage on the order of , where is the number of blocks in the file. Similarly, a conventional, non-streaming parser will also require memory usage on the order of , where is the number of records in the file and is the average record size. In the vast majority of real-world scenarios, and are 1s expected to be greater than 10, while is expected to be on the order of. Therefore, the embodiments herein are significantly more memory efficient than conventional techniques.

### VIII. Examnle Onerations

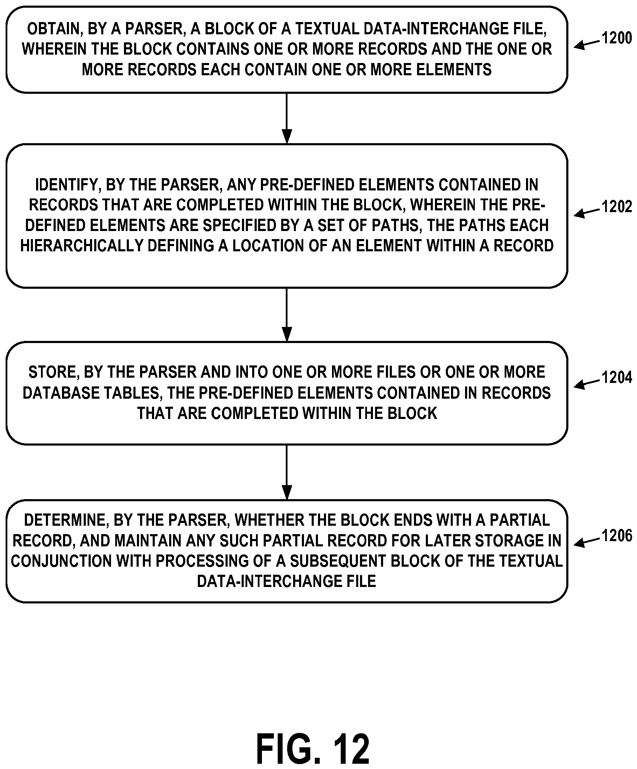

Figure 12 is a flow chart illustrating an example that does not include all the features of the claims. The process illustrated by Figure 12 may be carried out by a computing device, such as computing device 100, and/or a cluster of computing devices, such as server cluster 200. However, the process can be carried out by other types of devices or device subsystems. For example, the process could be carried out by a portable computer, such as a laptop or a tablet device.

The examples of Figure 12 may be simplified by the removal of any one or more of the features shown therein. Further, these examples may be combined with features, aspects, and/or implementations of any of the previous figures or otherwise described herein.

In general, the steps depicted in Figure 12 represent a single iteration of a series of iterations in a parser loop. Each iteration may be performed on a different block of a textual data-interchange file, such as a JSON file. For instance, a JSON file may be divided into blocks, and the series of iterations may be performed on each of the blocks, in order, from the beginning of the file to the end of the file. Notably, the size of the blocks may be pre-defined or configurable. Thus, block size could be 1 kilobyte, 10 kilobytes, 100 kilobytes, etc.

Step 1200 may involve obtaining, by a parser executing on the computing system, a block of the textual data-interchange file, where the block contains one or more records and the one or more records each contain one or more elements.

Step 1202 may involve identifying, by the parser, any pre-defined elements contained in records that are completed within the block, where the pre-defined elements are specified by a set of paths, the paths each hierarchically defining a location of an element within a record.

Step 1204 may involve storing, by the parser and into one or more files or one or more database tables, the pre-defined elements contained in records that are completed within the block.

Step 1206 may involve determining, by the parser, whether the block ends with a partial record, and maintaining any such partial record for later storage in conjunction with processing of a subsequent block of the textual data-interchange file.

In some examples, the subsequent block follows the block in the textual data-interchange file. For example, the subsequent block may immediately follow the block in the textual data-interchange file.

In some examples, the textual data-interchange file is a JSON file. But other file formats may be used. Nonetheless, the pre-defined elements may include at least one of objects, arrays, or values. Objects may include name / value pairs, and arrays may include lists of values.

In some examples, the computing system receives the subsequent block while the parser is processing the block.

In some examples, the block contains a plurality of complete records and ends with the partial record. Storing, in the one or more files or one or more database tables, the pre-defined elements contained in records that are completed within the block may involve storing, in the one or more files or one or more database tables, the pre-defined elements in the plurality of complete records but not those of the partial record.

In some examples, the block begins with an additional partial record, contains a plurality of complete records, and ends with the partial record. Storing, in the one or more files or one or more database tables, the pre-defined elements contained in records that are completed within the block may involve: (i) retrieving a previously maintained partial record related to the additional partial record, (ii) combining the previously maintained partial record and the additional partial record to create an additional complete record, and (iii) storing, in the one or more files or one or more database tables, the pre-defined elements in the additional complete record and the plurality of complete records.

In some examples, during the repeated performance of the operations, the parser uses no more than two blocks and one record worth of the memory for temporary storage of information from the textual data-interchange file.

In some examples, the pre-defined elements do not include all elements within the textual data-interchange file.

In some examples, the computing system is within a computational instance of a remote network management platform that uses the textual data-interchange file for communication with other devices. In other examples, the computing system is an IOT device with limited memory, processing power, and battery life.

### IX. Conclusion

The above detailed description describes various features and operations of the disclosed systems, devices, and methods with reference to the accompanying figures.

A step or block that represents a processing of information can correspond to circuitry that can be configured to perform the specific logical functions of a herein-described method or technique. Alternatively or additionally, a step or block that represents a processing of information can correspond to a module, a segment, or a portion of program code (including related data). The program code can include one or more instructions executable by a processor for implementing specific logical operations or actions in the method or technique. The program code and/or related data can be stored on any type of computer readable medium such as a storage device including RAM, a disk drive, a solid state drive, or another storage medium.

The computer readable medium can also include non-transitory computer readable media such as computer readable media that store data for short periods of time like register memory and processor cache. The computer readable media can further include non-transitory computer readable media that store program code and/or data for longer periods of time. Thus, the computer readable media may include secondary or persistent long term storage, like ROM, optical or magnetic disks, solid state drives, compact-disc read only memory (CD-ROM), for example. The computer readable media can also be any other volatile or non-volatile storage systems. A computer readable medium can be considered a computer readable storage medium, for example, or a tangible storage device.

Moreover, a step or block that represents one or more information transmissions can correspond to information transmissions between software and/or hardware modules in the same physical device. However, other information transmissions can be between software modules and/or hardware modules in different physical devices. The invention is defined by the appended claims.

## Claims

1. A method, performed by a computing system comprising:
a processor (102); and
memory (104) containing program instructions executable by the processor,
wherein the method comprises repeatedly performing, for blocks of a textual data-interchange file (800), operations including:
receiving, by a parser (900) executing on the computing system, a block of the textual data-interchange file (800), wherein the block contains one or more records (812, 822, 832), each encapsulated by a brace or a bracket, and wherein the one or more records each contain one or more elements (814-818, 824-828, 834-838), and each of the elements comprises an object containing a name / value pair, an array containing an ordered set of values, or a value, or a combination thereof; and while a next block is received:
identifying, by the parser (900), any pre-defined elements of the one or more elements contained in records (812, 822, 832) that are completed within the block, wherein the pre-defined elements are specified by a set of paths, each path hierarchically defining a location of an element within a record;
storing, by the parser (900), into one or more files or one or more database tables, the pre-defined elements contained in records that are completed within the block; and
determining, by the parser (900), whether the block ends with a partial record, and maintaining any such partial record for later storage in conjunction with processing of a subsequent block of the textual data-interchange file (800).

2. The method of claim 1, wherein the subsequent block follows the block in the textual data-interchange file (800).

3. The method of claim 2, wherein the subsequent block immediately follows the block in the textual data-interchange file (800).

4. The method of claim 1, wherein the textual data-interchange file (800) is a JavaScript Object Notation, JSON, file.

5. The method of claim 1, wherein the block (1102) contains a plurality of complete records and ends with the partial record, wherein storing the pre-defined elements contained in records that are completed within the block comprises:
storing the pre-defined elements in the plurality of complete records but not those of the partial record.

6. The method of claim 1, wherein the block (1106) begins with an additional partial record, contains a plurality of complete records, and ends with the partial record, and wherein storing the pre-defined elements contained in records that are completed within the block comprises:
retrieving a previously maintained partial record related to the additional partial record;
combining the previously maintained partial record and the additional partial record to create an additional complete record; and
storing the pre-defined elements in the additional complete record and the plurality of complete records.

7. The method of claim 1, wherein during the repeated performance of the operations, the parser (900) uses no more than two blocks and one record worth of the memory for temporary storage of information from the textual data-interchange file (800).

8. The method of claim 1, wherein the pre-defined elements do not include all elements within the textual data-interchange file (800).

9. A computing system comprising:
a processor (102);
a memory (104); and
a parser (900);
wherein the parser is configured to, for blocks of a textual data-interchange file, receive a block of the textual data-interchange file (800), wherein the block contains one or more records (812, 822, 832), each encapsulated by a brace or a bracket, and wherein the one or more records each contain one or more elements (814-818, 824-828, 834-838), and each of the elements comprises an object containing a name / value pair, an array containing an ordered set of values, or a value, or a combination thereof; and
wherein the parser (900) is configured to, for blocks of a textual data-interchange file and while a next block is received:
identify any pre-defined elements of the one or more elements contained in records (812, 822, 832) that are completed within the block, wherein the pre-defined elements are specified by a set of paths, each path hierarchically defining a location of an element within a record;
store into one or more files or one or more database tables, the pre-defined elements contained in records that are completed within the block; and
determine whether the block ends with a partial record, and maintain any such partial record for later storage in conjunction with processing of a subsequent block of the textual data-interchange file (800).

10. The computing system of claim 9, wherein the computing system is within a computational instance (322-328) of a remote network management platform (320) that uses the textual data interchange file (800) for communication with other devices.

11. An article of manufacture including a non-transitory computer-readable medium, having stored thereon program instructions that, upon execution by a computing system, cause the computing system to perform a method according to any of claims 1 to 8.

## Patentansprüche

1. Verfahren, das durch ein Rechensystem durchgeführt wird, umfassend:
einen Prozessor (102); und
einen Speicher (104), der Programmanweisungen enthält, die durch den Prozessor ausführbar sind,
wobei das Verfahren das wiederholte Durchführen von Vorgängen für Blöcke einer Textdatenaustauschdatei (800) umfasst, einschließlich:
Empfangen, durch einen Parser (900), der auf dem Rechensystem ausgeführt wird, eines Blocks der Textdatenaustauschdatei (800), wobei der Block einen oder mehrere Datensätze (812, 822, 832) enthält, die jeweils durch eine geschweifte Klammer oder eine eckige Klammer eingekapselt sind, und wobei der eine oder die mehreren Datensätze jeweils ein oder mehrere Elemente (814-818, 824-828, 834-838) enthalten, und jedes der Elemente ein Objekt, das ein Paar aus Name/Wert enthält, ein Array, das einen geordneten Satz von Werten enthält, oder einen Wert oder eine Kombination daraus umfasst; und während ein nächster Block empfangen wird:
Identifizieren, durch den Parser (900), aller vordefinierten Elemente des einen oder der mehreren Elemente, die in den Datensätzen (812, 822, 832) enthalten sind, die innerhalb des Blocks abgeschlossen sind, wobei die vordefinierten Elemente durch einen Satz von Pfaden spezifiziert sind, wobei jeder Pfad eine Position eines Elements innerhalb eines Datensatzes hierarchisch definiert;
Speichern, durch den Parser (900), in eine oder mehrere Dateien oder eine oder mehrere Datenbanktabellen, der vordefinierten Elemente, die in Datensätzen enthalten sind, die innerhalb des Blocks abgeschlossen sind; und
Bestimmen, durch den Parser (900), ob der Block mit einem Teildatensatz endet, und Beibehalten eines solchen Teildatensatzes für eine spätere Speicherung in Verbindung mit einer Verarbeitung eines nachfolgenden Blocks der Textdatenaustauschdatei (800).

2. Verfahren nach Anspruch 1, wobei der nachfolgende Block dem Block in der Textdatenaustauschdatei (800) folgt.

3. Verfahren nach Anspruch 2, wobei der nachfolgende Block dem Block in der Textdatenaustauschdatei (800) unmittelbar folgt.

4. Verfahren nach Anspruch 1, wobei die Textdatenaustauschdatei (800) eine JavaScript-Object-Notation-Datei, JSON-Datei, ist.

5. Verfahren nach Anspruch 1, wobei der Block (1102) eine Vielzahl von abgeschlossenen Datensätzen enthält und mit dem Teildatensatz endet, wobei das Speichern der vordefinierten Elemente, die in Datensätzen enthalten sind, die innerhalb des Blocks abgeschlossen sind, umfasst:
Speichern der vordefinierten Elemente in der Vielzahl von abgeschlossenen Datensätzen, aber nicht denen des Teildatensatzes.

6. Verfahren nach Anspruch 1, wobei der Block (1106) mit einem zusätzlichen Teildatensatz beginnt, eine Vielzahl von abgeschlossenen Datensätzen enthält und mit dem Teildatensatz endet, und wobei das Speichern der vordefinierten Elemente, die in Datensätzen enthalten sind, die innerhalb des Blocks abgeschlossen sind, umfasst:
Abrufen eines zuvor beibehaltenen Teildatensatzes, der sich auf den zusätzlichen Teildatensatz bezieht;
Kombinieren des zuvor beibehaltenen Teildatensatzes und des zusätzlichen Teildatensatzes, um einen zusätzlichen abgeschlossenen Datensatz zu erzeugen; und
Speichern der vordefinierten Elemente in dem zusätzlichen abgeschlossenen Datensatz und der Vielzahl von abgeschlossenen Datensätzen.

7. Verfahren nach Anspruch 1, wobei während der wiederholten Durchführung der Vorgänge der Parser (900) nicht mehr als zwei Blöcke und einen Datensatz in dem Speicher für die temporäre Speicherung von Informationen aus der Textdatenaustauschdatei (800) verwendet.

8. Verfahren nach Anspruch 1, wobei die vordefinierten Elemente nicht alle Elemente innerhalb der Textdatenaustauschdatei (800) einschließen.

9. Rechensystem, umfassend:
einen Prozessor (102);
einen Speicher (104); und
einen Parser (900);
wobei der Parser konfiguriert ist, um, für Blöcke einer Textdatenaustauschdatei, einen Block der Textdatenaustauschdatei (800) zu empfangen, wobei der Block einen oder mehrere Datensätze (812, 822, 832) enthält, die jeweils durch eine geschweifte Klammer oder eine eckige Klammer eingekapselt sind, und wobei der eine oder die mehreren Datensätze jeweils ein oder mehrere Elemente (814-818, 824-828, 834-838) enthalten, und jedes der Elemente ein Objekt, das ein Paar aus Name/Wert enthält, ein Array, das einen geordneten Satz von Werten enthält, oder einen Wert oder eine Kombination daraus umfasst; und
wobei der Parser (900), für Blöcke einer Textdatenaustauschdatei und während ein nächster Block empfangen wird, konfiguriert ist zum:
Identifizieren aller vordefinierten Elemente des einen oder der mehreren Elemente, die in den Datensätzen (812, 822, 832) enthalten sind, die innerhalb des Blocks abgeschlossen sind, wobei die vordefinierten Elemente durch einen Satz von Pfaden spezifiziert sind, wobei jeder Pfad eine Position eines Elements innerhalb eines Datensatzes hierarchisch definiert;
Speichern, in eine oder mehrere Dateien oder eine oder mehrere Datenbanktabellen, der vordefinierten Elemente, die in Datensätzen enthalten sind, die innerhalb des Blocks abgeschlossen sind; und
Bestimmen, ob der Block mit einem Teildatensatz endet, und Beibehalten eines solchen Teildatensatzes für die spätere Speicherung in Verbindung mit der Verarbeitung eines nachfolgenden Blocks der Textdatenaustauschdatei (800).

10. Rechensystem nach Anspruch 9, wobei das Rechensystem innerhalb einer Recheninstanz (322-328) einer Fernnetzverwaltungsplattform (320) liegt, die die Textdatenaustauschdatei (800) für eine Kommunikation mit anderen Vorrichtungen verwendet.

11. Herstellungserzeugnis, einschließlich eines nicht flüchtigen, computerlesbaren Mediums, das Programmanweisungen aufweist, die darauf gespeichert sind, die bei Ausführung durch ein Rechensystem das Rechensystem veranlassen, ein Verfahren nach einem der Ansprüche 1 bis 8 durchzuführen.

## Revendications

1. Procédé, réalisé par un système informatique comprenant :
un processeur (102) ; et
une mémoire (104) contenant des instructions de programme exécutables par le processeur,
dans lequel le procédé comprend la réalisation répétée, pour des blocs d'un fichier d'échange de données textuel (800), d'opérations comportant :
la réception, par un analyseur (900) s'exécutant sur le système informatique, d'un bloc du fichier d'échange de données textuel (800), dans lequel le bloc contient un ou plusieurs enregistrements (812, 822, 832), chacun encapsulé par une accolade ou un crochet, et dans lequel le ou les enregistrements contiennent chacun un ou plusieurs éléments (814-818, 824-828, 834-838), et chacun des éléments comprend un objet contenant une paire nom/valeur, un réseau contenant un ensemble ordonné de valeurs, ou une valeur ou leur combinaison ; et pendant la réception d'un bloc suivant :
l'identification, par l'analyseur (900), d'éléments prédéfinis quelconques du ou des éléments contenus dans des enregistrements (812, 822, 832) qui sont achevés au sein du bloc, dans lequel les éléments prédéfinis sont spécifiés par un ensemble de chemins, chaque chemin définissant hiérarchiquement un emplacement d'un élément au sein d'un enregistrement ;
le stockage, par l'analyseur (900), dans un ou plusieurs fichiers ou une ou plusieurs tables de bases de données, des éléments prédéfinis contenus dans des enregistrements qui sont achevés au sein du bloc ; et
la détermination, par l'analyseur (900), du fait de savoir si le bloc se termine par un tel enregistrement partiel quelconque, et le maintien d'un tel enregistrement partiel quelconque pour un stockage ultérieur conjointement avec le traitement d'un bloc ultérieur du fichier d'échange de données textuel (800).

2. Procédé selon la revendication 1, dans lequel le bloc suivant suit le bloc dans le fichier d'échange de données textuel (800).

3. Procédé selon la revendication 2, dans lequel le bloc suivant suit immédiatement le bloc dans le fichier d'échange de données textuel (800).

4. Procédé selon la revendication 1, dans lequel le fichier d'échange de données textuel (800) est un fichier de notation d'objet Java Script, JSON.

5. Procédé selon la revendication 1, dans lequel le bloc (1102) contient une pluralité d'enregistrements achevés et se termine par l'enregistrement partiel, dans lequel le stockage des éléments prédéfinis contenus dans des enregistrements qui sont achevés au sein du bloc comprend :
le stockage des éléments prédéfinis dans la pluralité d'enregistrements achevés mais pas ceux de l'enregistrement partiel.

6. Procédé selon la revendication 1, dans lequel le bloc (1106) commence par un enregistrement partiel supplémentaire, contient une pluralité d'enregistrements achevés, et se termine par l'enregistrement partiel, et dans lequel le stockage des éléments prédéfinis contenus dans des enregistrements qui sont achevés au sein du bloc comprend :
la récupération d'un enregistrement partiel précédemment maintenu lié à l'enregistrement partiel supplémentaire ;
la combinaison de l'enregistrement partiel précédemment maintenu et de l'enregistrement partiel supplémentaire pour créer un enregistrement achevé supplémentaire ; et
le stockage des éléments prédéfinis dans l'enregistrement achevé supplémentaire et la pluralité d'enregistrements achevés.

7. Procédé selon la revendication 1, dans lequel, pendant la réalisation répétée des opérations, l'analyseur (900) n'utilise pas plus de deux blocs et un enregistrement de la mémoire pour le stockage temporaire d'informations à partir du fichier d'échange de données textuel (800).

8. Procédé selon la revendication 1, dans lequel les éléments prédéfinis ne comportent pas tous les éléments au sein du fichier d'échange de données textuel (800).

9. Système informatique comprenant :
un processeur (102) ;
une mémoire (104) ; et
un analyseur (900) ;
dans lequel l'analyseur est configuré pour, pour des blocs d'un fichier d'échange de données textuel, recevoir un bloc du fichier d'échange de données textuel (800), dans lequel le bloc contient un ou plusieurs enregistrements (812, 822, 832), chacun encapsulé par une accolade ou un crochet, et dans lequel le ou les enregistrements contiennent chacun un ou plusieurs éléments (814-818, 824-828, 834-838), et chacun des éléments comprend un objet contenant une paire nom/valeur, un réseau contenant un ensemble ordonné de valeurs, ou une valeur ou une combinaison de ceux-ci ; et
dans lequel l'analyseur (900) est configuré pour, pour des blocs d'un fichier d'échange de données textuel et pendant la réception d'un bloc suivant :
identifier des éléments prédéfinis quelconques du ou des éléments contenus dans des enregistrements (812, 822, 832) qui sont achevés au sein du bloc, dans lequel les éléments prédéfinis sont spécifiés par un ensemble de trajets, chaque trajet définissant hiérarchiquement un emplacement d'un élément au sein d'un enregistrement ;
stocker dans un ou plusieurs fichiers ou une ou plusieurs tables de bases de données, les éléments prédéfinis contenus dans des enregistrements qui sont achevés au sein du bloc ; et
déterminer si le bloc se termine par un enregistrement partiel et maintenir un tel enregistrement partiel quelconque pour un stockage à venir conjointement avec le traitement d'un bloc ultérieur du fichier d'échange de données textuel (800).

10. Système informatique selon la revendication 9, dans lequel le système informatique est au sein d'une instance de calcul (322-328) d'une plateforme de gestion de réseau à distance (320) qui utilise le fichier d'échange de données textuel (800) pour une communication avec d'autres dispositifs.

11. Article de fabrication comportant un support non transitoire lisible par ordinateur, sur lequel sont stockées des instructions de programme qui, lors de l'exécution par un système informatique, amènent le système informatique à réaliser un procédé selon l'une quelconque des revendications 1 à 8.
